# EUROPEAN PATENT SPECIFICATION

(11) **EP 2 433 022 B1**
(45) Date of publication and mention of the grant of the patent: **02.12.2015**
(21) Application number: 10778019.9
(22) Date of filing: 18.05.2010
(51) Int. Cl.: F16B 21/07

(54) **ADJ USTABLE SNAP LOCK**
EINSTELLBARER SCHNAPPVERSCHLUSS
FERMETURE À ENCLIQUETAGE RÉGLABLE

(30) Priority: 18.05.2009 SE 0950344
(43) Date of publication of application: 28.03.2012
(73) Proprietor: Nordhydraulic AB, 872 24 Kramfors (SE); Hakaryd AB, 871 31 Härnösand (SE)
(72) Inventor: JANSSON, Gunnar, S-870 30 Nordingrå (SE); ZETTERBLAD, Stefan, S-872 33 Kramfors (SE)
(74) Representative: Brann AB
(86) International application number: PCT/SE2010/050538
(87) International publication number: WO 2010/134879

(56) References cited:
- DE-U1- 9 217 185
- DE-U1- 9 217 185
- US-B1- 6 276 652

## Description

### Technical field

The present invention relates to an adjustable snap lock and more specifically to an adjustable snap lock for adjustable assembly of apparatus housings.

### Background of the invention

At cantilever assembly of shell shaped apparatus housing in working vehicles e.g. forest machines, tractors or similar it is desirable to rapidly and easily be able to set the operating unit according to the desire of the driver. A drawback with snap locks according to prior art is that they are intended to be mounted inelastic to any elongated fastening means such as the end of a bar or similar and that there is no or limited possibility to readjust the mutual positions of the lock parts. In other words, this means that the lock parts have to be exactly positioned with regard to each other so that the snap lock can work in the intended way. The fact that the lock parts have to show exact position in relationship to each other also signifies that the assembly becomes very time consuming and the possibility to readjustment or individual adaptation is limited.

Document DE 92 17 185 U1 describes a snap connection to be used when hanging items on a wall.

### Summary of the invention

The object of this invention is therefore to provide an adjustable snap lock for cantilever assembling of a shell shaped apparatus housing that enables rapid and simple adaptation of the apparatus housing and that in an efficient way locks the apparatus housing in a desirable position on a fastening means or against a surface axially as well as against turning of the apparatus housing on the fastening means/the surface. Furthermore, it is desirable to provide an adjustable snap lock which facilitates adaptation and assembly of the apparatus housing on the fastening means/surface.

Said object of the present invention is solved with an adjustable snap lock of the type mentioned in claim 1.

A snap lock for adjustable assembly of an apparatus housing according to the present invention comprises a first and a second lock part, where said first lock part when pressed out from a substantially released position is mountable on said second lock part and is locked against withdrawal from the second part in mounted locking position by way of snapping action. The first lock part has a sleeve provided with a constriction that when pressed out and hence mechanical pre-stressed can is mountable on the second lock part over a front end portion (8) thereof, wherein the sleeve first is set in a pressed out position before the sleeve when locking position is achieved is held blocked against being pulled off by way of cooperation between the constriction and a thickening arranged on the front end portion of the second lock part as well as limited against turning by way of friction forces appearing between the sleeve and the contact area of the second lock part. Furthermore, a friction means is provided in the area between the contact areas of the second lock part and of the sleeve so that the contact pressure on the frictions means varies when switching the constriction between the locking position and the pressed out position, wherein the friction means by influence of the snapping effect is brought to elastic deformation between the contact areas in the locking position to prevent turning and that it substantially recover its form when the contact pressure again is reduced in the pressed out position.

Adjustment and mounting of the apparatus housing by means of the snap lock is made easy if the constriction and the thickening are adapted to cooperate in such a way that the deformation degree of the friction means is increasing as a result of providing a higher mutual speed of velocity between the constriction and the thickening when switching to locking position. The friction characteristics are also changed due to the transition from static friction to varying dynamic friction when the speed of velocity is increased from standing still.

The friction means can comprise one or more rings of elastic material in circumferential cavities formed as grooves on the contact areas in either the contact areas of the sleeve or the second lock part. The friction means can also completely or partly be integrated with the contact areas so that the friction means forms bulges on the contact areas. Thus, a greater movement is given in the geometrical configuration and rings or in principle, arbitrary formed fields can be used.

The locking parts are advantageously made of an elastic plastic material, preferably of a thermoplastic elastomeric material, a so called TPE-plastic. Such a material does sometimes allow the integration of the friction means through a multi material injection-mould or something similar.

Embodiments of present invention are defined in the independent patent claims. Other purposes, advantages and new characteristics of the new invention will be obvious from the detailed description of the invention in view of the attached drawings.

### Brief description of the drawings

Preferred embodiments of the invention will now be described in greater detail with reference to the accompanying drawings, in which
Fig.1 a-c shows schematically a perspective view with dismounted parts and a cross sectional view of an adjustable snap lock with outer friction means according to the present invention,
Fig.2a-c shows schematically a perspective view with dismounted parts and a cross sectional view of a snap lock with internal friction means according to the present invention,
Fig.3 shows schematically a perspective view with dismounted parts of an adjustable snap lock with ring flanges integrated in the second locking part according to the invention,
Fig.4 shows schematically a perspective view with dismounted parts of an adjustable snap lock with ring flanges integrated in the second lock part according to the invention,
Fig.5a-c shows schematically a perspective view and cross section views of a mounted and a dismounted adjustable snap lock respectively with an outer friction means according to the present invention, and
Fig.6 shows schematically different embodiments of integrated friction means.

### Detailed description of preferred embodiments

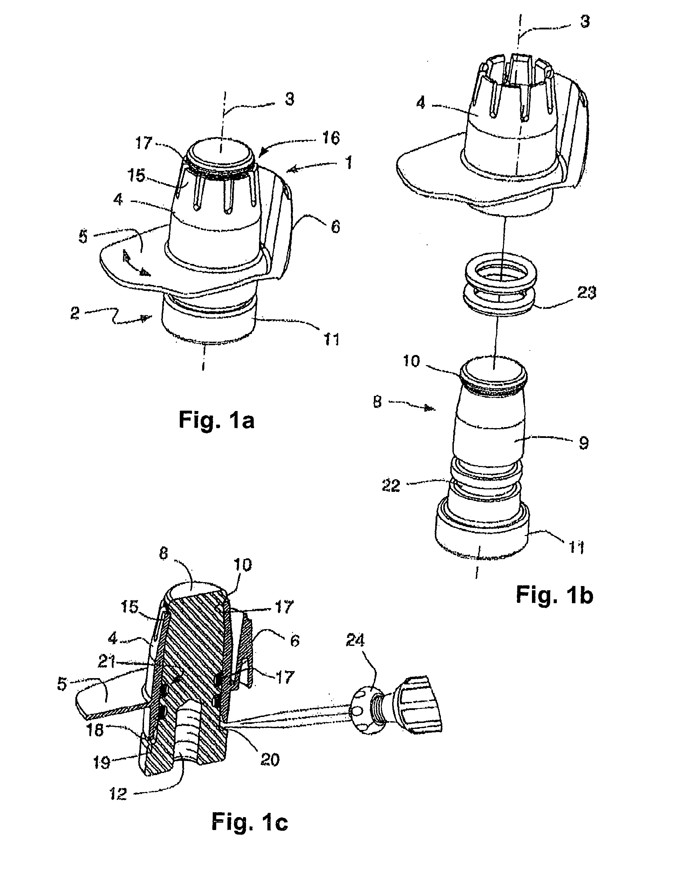

The adjustable snap lock is described in a first embodiment with reference to the attached drawings Fig.1-Fig.2 and comprises a first lock part 1 and a second lock part 2 of which the first lock part 1 when pressed out from a substantially released position is mountable on said second lock part 2 for achieving a blocking lock position. The first lock part 1 can be switched in and out of a blocking lock position to the second lock part 2 wherein said first lock part 1 can be rotated in a horizontal level around a substantially vertical axis 3 shown with the double arrow in Fig. 1 a when the snap lock is in a non locking position with one of the locking part partly adapted on the second lock part. The first lock part 1 is limited against turning on the second part 2 in snapped on position by way of friction forces acting between the contact surfaces of the parts.

In one embodiment of present invention the first lock part 1 is designed to form a continuous part of a shell formed part of an apparatus housing or the entire apparatus housing, in the figures shown as a fragmentary piece, and which first lock part is adapted to be mounted cantilever on the second lock part 2 which in turn is adapted to be mounted on a fastening means or a surface that can consist of a bracket, bar or similar element at a driver seat. The housing is preferably made of a plastic material. Below embodiments of the present invention are described where the first lock part 1 constitutes a part of a shell formed housing. However, the invention is not limited to this but the first lock part can be connected to something else than a shell formed part or a housing.

Fig. 1a and Fig 1b schematically shows a snap lock according to one embodiment of the invention where the first lock part 1 comprises a ring shaped sleeve 4 which extending as a part of a bottom part 5 of a shell formed part 6 is designed as a flanging directed upwards from said bottom part. The sleeve 4 is preferably entirely or partly included in some sort of apparatus housing. The ring shaped sleeve 4 is designed to be brought on the second lock part 2 in a surrounding manner, which second lock part 2 for this purpose is designed with a front end section 8 of a circular pin like means. Said front end section 8 has a contact surface 9 which is conical tapered towards its front end and at the very end it is provided with a diametrically thickened part 10 or bulge. At its rear end 11, that is in a end part opposite the front end section 8, the pin like means can be provided with a threading 12 with which it is detachably mounted at the end of a fastening means which can consist of a bar which in turn can be fixed mounted with a chair frame or similar means in a driver's cab (not shown). The ring shaped sleeve 4 is proved with an internally hollow wall with conically shaped contact surface substantially corresponding to the shape of the outer periphery of the contact surface of said front end section 8 but with a constriction 16 wherein the thickened part 10 of the front end section 8 can be received in and when pressed out and hence mechanically pre-stressed can be brought to pass through the sleeve 4 over the front end section so that the sleeve 4 first is brought in a pressed out state before the sleeve 4 when locking position is reached is kept blocked from being pulled off by cooperation between the constriction 16 and the diametrically thickened part 10, in the following called thickening 10, and is also limited against turning by way of a friction force acting between the sleeve and the contact surfaces of the second lock part 2.

Turning of the locking part 1, 2 relatively each other in the locking position is further prevented by a friction means 21 provided in the area between the contact surfaces of the second lock part 2 and of the sleeve 4 so that the contact pressure on the friction means 21 varies when switching the constriction between the locking position and the pressed out position, wherein the friction means by way of influence of the snap effect is brought to elastic deformation between the contact surfaces in the locking position to prevent turning and that it substantially recovers its form when the contact pressure again is reduced in the pressed out position.

The ring shaped sleeve 4 of the first lock part 1 is in one embodiment of the invention slotted near its upper edge to form a suitable number of slots, for example eight, which extends from the upper end of the sleeve downwards along a part of the length of the sleeve so that a circumferential evenly distributed series of resilient lock tongues 15 are formed. As a result of the conical shape of the ring shaped sleeve 4 the locking tongues batter inwards towards the centre axle 3 and forms consequently the constriction 16 which by being pressed out when cooperating with the thickening part 10 is pre stressed mechanically when the shell formed part 6 and hence also the sleeve 4 are pressed down on the front end section 8. Every locking tongue 15 forms a shoulder 17 at its free end, which shoulder moves in blocking lock engagement with the thickening part 10 of the front end section 8 by snapping it behind the later when the ring shaped sleeve 4 is located in a depressed locking position on the front end section 8. In this position the sleeve 4 and also the shell formed part 6 are prevented from being pulled off upwards from the front end section 8 by locking cooperation between the shoulders 17 of the locking tongues 15 and the thickening part 10 of the front end section.

As is best shown in Fig.1c the displacement of the ring shaped sleeve 4 is limited in one embodiment of present invention in or down on the front end section 8 by cooperation between a collar 18 and a lower edge 19, respectively, included in said front end section 8 and said sleeve 4. More exactly, the collar 18 and the thickening part 10 of the front end section 8 are arranged in such distance from each other that a ring shaped gap 20 is delimited between the collar and the edge when the ring shaped sleeve is situated in its locking position on the front end section 8.

Fig. 1b shows schematically one embodiment of the present invention where it between the front end section 8 and the meeting contact surfaces of the sleeve 4 is arranged a friction means 21 comprising two circumferentially groove shaped cavities 22 provided on the periphery of the front end section 8, in which grooves a ring 23 of elastic material, e.g. an O-ring, respectively is occupied. When the ring shaped sleeve 4 is pressed or hit downwards on the front end section 8 the tongues 15 are pressed apart by cooperation with the thickening part 10 of the front end section 8. The friction means 21 is dimensionally so adapted to the area between the meeting contact surfaces that the pressure or the force on the friction means 21 is decreased when the tongues 15 are pressed apart, wherein also the friction between the front end section 8 and the sleeve 4 is decreasing in such way that the shell shaped part 6 and hence also the sleeve 4 by hand can be adjusted by turning of the front end section 8, i.e. in a horizontal level around the substantially vertical turning axis 3 shown with the doubled arrow in Fig.1a. When the shell shaped part 6 has reached the desired angle position the snap lock is switched to locked position by rapidly pressing the shell shaped part 6 and hence the sleeve 4, e,g by the force from a hit from above, downwards towards the front end section 8 so that the shoulders 17 of tongues 15 are snapped in behind the thickening part 10, wherein the contact pressure against the friction means 21 by way of snap action gets so great that the friction means 21 is deformed elastically and the shell shaped part 6 by adhesion is kept on the front end section 8 in the desired angle position.

As is shown in Fig 1 c the shell shaped part 6 can easily be released from its locked position by way of any suitable hand tool 24, e.g a normal slotted screw driver, by driving the shoulders 17 of the locking tongues 15 out of blocking engagement with the thickening part 10 of the front end section 8. More exactly, this is achieved by fitting the hand tool 24 in the ring shaped gap 20 whereupon the collar 18 and the lower edge 19 of the sleeve 4 are driven from each other so that locking tongues is switched into a pressed out mechanically pre-stressed position. The friction means 21 is designed with such an inner friction that it rapidly substantially recovers its form when the contact pressure once again decreases in the pressed out position of the locking tongues 15. As is shown in Fig. 1 c the ring shaped gap 20 is located outside the shell shaped part 6 or its bottom with respect to the accessibility of the hand tool.

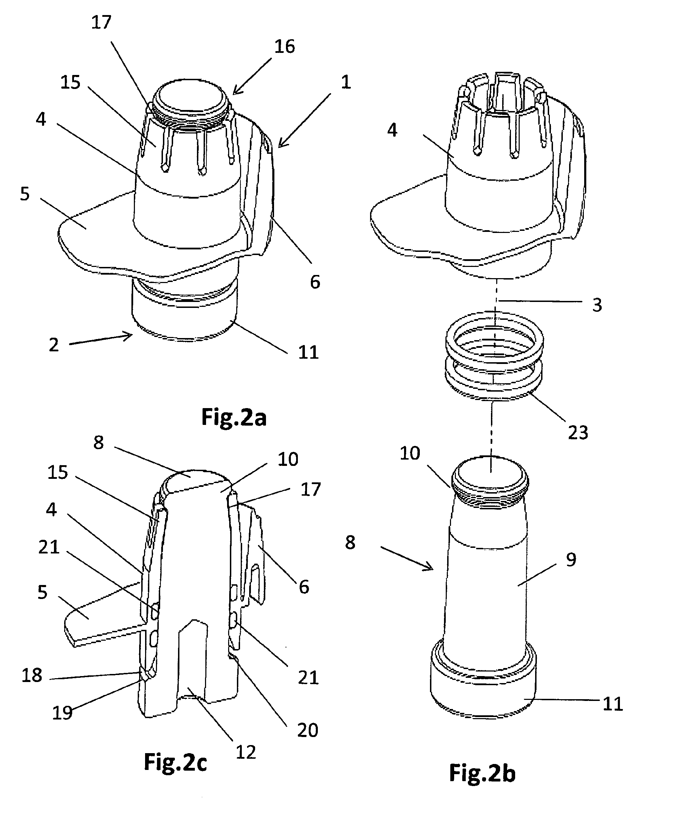

Fig. 2a-c schematically show one embodiment of present invention where the friction means 21 comprises rings 23 of an elastic material arranged internally in grooves 22 in the sleeve 4 instead of as in the above described embodiment where the friction means 21 comprises rings 23 of an elastic material arranged externally in grooves 22 on the second lock part 2. The function is essentially the same for both embodiments. Said first and second lock parts are preferably made of a polymeric material. Elastic plastic materials such as thermoplastics elastomeric materials (TPE) can be used. The rings 23 can be of another material composition, e.g. O-rings of nitrile rubber can be used.

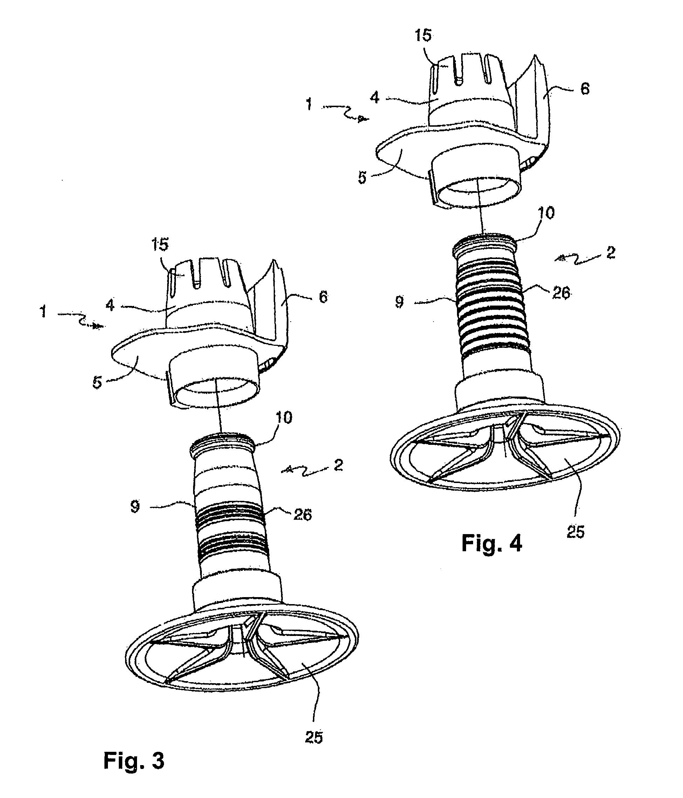

In Fig.3 and Fig.4 embodiments of present invention are shown, from which it is obvious that multi material technique, e.g. multi material injection-moulding, can be used for production of adjustable snap locks of present type with integrated friction means of eligible hardness. In the figures parts described before are provided with equal reference numbers to make clear that it parts with substantially the same function. The snap lock and the friction means are preferably made of a polymeric material, more preferably an elastic polymeric material, most preferably a thermoplastic elastomeric material, so called TPE-material. This material class also comprises sub classes such as TPU-plastics, TPO-plastics, TPV-plastics, etc. O-rings that can be used as rings 23 as mentioned above have usually a Shore A Durometer hardness in the interval 60-80. Construction plastics such as polyamide usually have a Shore D Durometer hardness in the interval 70-90. By multi material injection-moulding, materials with low Shore A Durometer hardness can be mixed with a material with a higher Shore A Durometer hardness. The TPE-material usually has a Shore A hardness in the interval 35-80. As an example, the first and the second lock parts 1, 2 such as a frame work material could be provided the Shore D hardness 70 to 90, while the friction means could be provided Shore A hardness in the interval 70-90. In another example, the first and second lock parts 1, 2 such as a frame work material are provided the Shore A hardness 70-90, while the friction means is provided a Shore A hardness in the interval 40-60. The combination of a soft friction means 21 and a substantially harder first and second lock parts 1, 2 has appeared to function well to limit the parts against mutual turning by an appearing friction force between the contact surfaces of the first and the second lock parts, since the friction means 21 is designed as flange parts which extends radial from one of the lock parts 1, 2. This means that the parts have a circumferential annular configuration with elastic flexibility substantially radial but also axially to a certain extent.

As described above, the adjustable snap lock comprises first and second lock parts 1, 2 of which the first lock part 1 when pressed out from a substantially relaxed position, is mountable on the second lock part 2 to achieve a blocking lock state. The main differences between the embodiment described in the beginning and this later embodiment have in the first place reference to the second lock part 2 which has a front end section 8 formed as a part of a elongated circular pin like means. Said front end section 8 has a contact surface 9 which is conically tapered towards its front end and at the end it is provided with a diametrically thickened part 10 or bulge. At its rear end 11 the elongated means 9 is provided with a radial extended foot 25 which can be designed in one piece with the elongated tap like means alternatively detachably mounted at said rear end. The foot 25 can be adapted to be mounted on a surface such as centre bracket or similar in a working vehicle. Regarding the second lock part 2, this is designed as a core- or a frame work part with an integrated friction means 21 bound thereto, e.g. by multi injection moulding. As is shown in Fig.3 and Fig.4, the friction means 21 is designed as a number of ring flanges 26 arranged at a distance from each other along the longitudinal axis of the front end section 8, which ring flanges extends in a radial direction substantially perpendicular to the longitudinal- or the axial direction of the end section 8. In the embodiment in Fig.3, the ring flanges 26 are arranged in groups of two which separately comprises a greater number of relatively small flanges, like micro flanges, located on the rear part of the front end section 8. In the embodiment in Fig.4, the ring flanges 26 are distributed evenly along the essential length of the front end section 8.

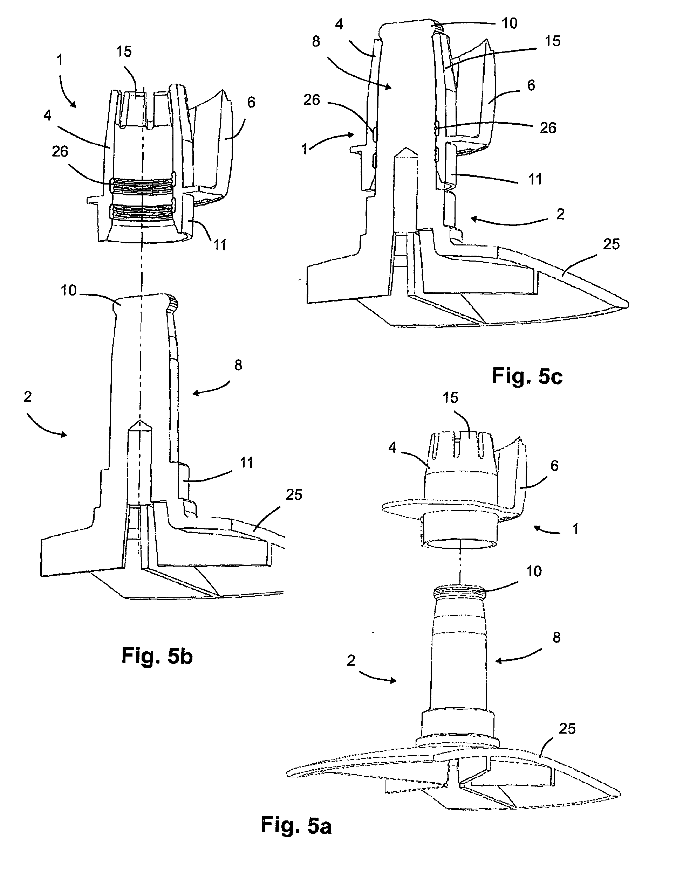

As the above mentioned difference between the embodiments shown in Fig.1 and Fig.2 the embodiment shown in Fig.5a-c differs from the embodiments shown in Fig.3 and Fig.4 in that the ring flanges 26 are arranged internally of the sleeve 4 instead of externally on the second lock part. The ring flanges 26 are integrated with the sleeve 4, e.g. by using injection-moulding. Hence, preferably a TPE-material is used when producing of the snap lock according to this embodiment.

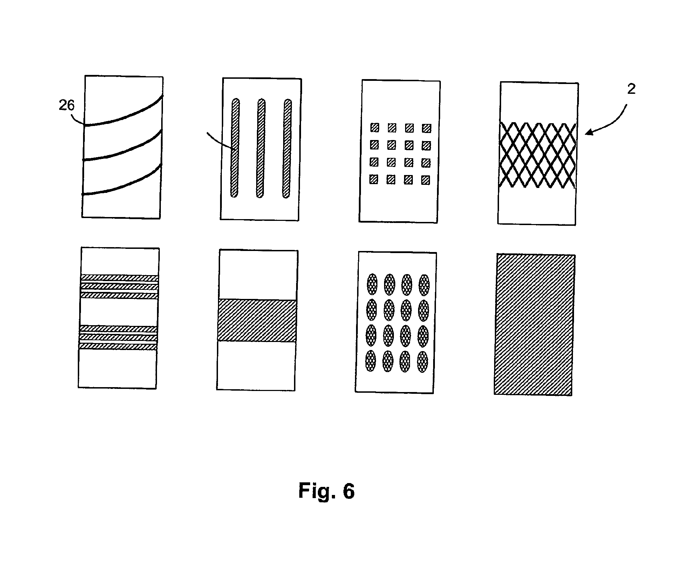

The injection-moulding gives the opportunity to use other geometries for the ring flanges 26. These can instead be designed as convexities 26 of an elastic material with an arbitrary design and distribution which extends from contact surface of the second lock part 2 or the sleeve 4. Fig.6 illustrates some alternative designs and distributions of convexities of the friction mean 21. The convexities 26 can for example be arranged as discrete fields or lines, which can form an array or a helix on the contact surface of the sleeve 4 or the second lock part 2. Substantially the entire contact surface can also be covered with the elastic material.

In one embodiment the integrated ring flanges or convexities 26 are also countersunk in the contact surface of the sleeve 4 or the second lock part 2. The countersink can be approximately 0,5 mm for the ring flanges or convexities extending approximately 0,5 mm from the contact surface.

The ring flanges or the convexities like the rings 23 in the previously described embodiments can be of varying thickness along the longitudinal direction of the sleeve 4 or the second lock part 2, and also different thickness in other directions for the convexities 26. Furthermore, ring flanges or convexities 26 can be provided with stratified material composition or with different material composition on different parts of the contact surface by triple moulding with the aim of obtaining varying stiffness or improved friction properties.

The snap lock according to present invention is preferable made in a plastic material and with suitable plastic die cast methods. The different lock parts and the rings of the friction means does not have to be made in the same material. As an example, the second lock part can be made in metal while the first lock part and the friction means are made in plastic. As plastic material a number of usual construction plastics can be used, but elastic plastics and in particularly thermoplastic elastomeric material gives certain possibilities, which have been discussed above.

It is to be understood that the invention is not to be limited to the details above given, but may be modified within the scope of the appended claims.

## Claims

1. Snap lock comprising a first and a second lock part (1, 2) for adjustable mounting of apparatus housing, where the first lock part (1) when pressed out from a substantially unstressed position is mountable on the second lock part (2) and in mounted lock position by snap action is blocked from being taken off from the second part, said first lock part (1) comprises a sleeve (4) provided with a constriction (16) which when being pressed out and hence mechanically pre-stressed is mountable on the second lock part (2) over a front end section (8) thereof, wherein said sleeve (4) firstly is put in a pressed out position before the sleeve (4) at reached locking position is kept blocked against being taken off by cooperation between constriction and a thickening (10) arranged on the front end section (8) of the second lock part (2), **characterized in that**, said first lock part (1) is limited against turning by a friction force acting between the sleeve (4) and the contact surfaces of the second lock part (2), and **in that** a friction means (21) is arranged in the area between contact surfaces of the second lock part (2) and the sleeve (4) so that the contact pressure on the friction means (21) is varying when switching the constriction between the locking position and the pressed out position, wherein the friction means when affected by the snap effect is brought to elastic deformation between the contact surfaces in the locking position to prevent turning and that it substantially recover its shape when the contact pressure again is decreased in the pressed out position.

2. Snap lock according to claim 1, wherein the constriction (16) and the thickening (10) are adapted to cooperate in such a way that the deformation degree of the friction means (21) is increasing as a result of providing a higher mutual motion velocity between the constriction (16) and the thickening (10) when switching to locking position.

3. Snap lock according to claim 1 or 2, wherein the friction means (21) comprises an elastic polymeric material, preferably a thermoplastic elastomeric material (TPE).

4. Snap lock according to any of claim 1-3, wherein the constriction (16) is formed of a series of resilient tongues (15) in one end of the sleeve (4).'

5. Snap lock according to any of the claim 1-4, wherein the front end section (8) is designed with a conically shaped contact surface (9) which narrows towards its free end and that the sleeve (4) is designed with an interior with a design substantially corresponding to said contact surface.

6. Snap lock according to any of claim 1-5, wherein the sleeve (4) emanates from a part of a shell shaped part (6) and has the form of a flanging directed upwards.

7. Snap lock according to any of claim 1-6, wherein a ring shaped gap (20) in the locking position is delimited between a collar (18) and an edge (19) respectively, included in the sleeve (4) and the front end section (8).

8. Snap lock according to claim 7, wherein the ring shaped gap (20) has a width so adapted that the sleeve (4) can be driven out of its locking position by an actuating hand tool inserted in the gap.

9. Snap lock according to any of the claims 1-8, wherein the friction means (21) comprises at least one groove shaped circumferential cavity (22) formed on the contact surface of the second lock part (2) or of the sleeve (4) in which cavity/-s a ring (23), respectively, of an elastic material is received.

10. Snap lock according to any of the claims 1-9, wherein the friction means (21) at least partly is integrated with any of the lock parts (1, 2), forming convexities (26) extending from the contact surface of the second lock part (2) or of the sleeve (4).

11. Snap lock according to claim 10, wherein the integrated convexities (26) are countersunk in the contact surface.

12. Snap lock according to any of the claims 9-11, wherein the friction means (21) are essentially softer than the lock part (1, 2) as to the rest.

13. Snap lock according to any of the claims 10-12, wherein the snap lock is made of an elastic polymeric material, preferably a thermoplastic elastomeric material (TPE), comprising a friction means (21) which is integrated with any of the lock parts (1, 2) by multi injection-moulding.

14. Snap lock according to any of the claims 11-13, wherein the friction means (21) is designed as a number of ring flanges (26) extending in radial direction towards the longitudinal- or the axial direction of the end section, which ring flanges (26) are arranged along the length of the front end section (8).

15. Snap lock according to any of the claims 10-14, wherein the friction means (21) has a Shore A Durometer hardness in the interval 2 to 6, preferably 3 to 5.

16. Snap lock according to any of the claims 10-15, wherein said first and second lock parts (1, 2) have a Shore A Durometer hardness in the interval 50 to 80, preferably 60 to 80.

## Patentansprüche

1. Schnappschloss, umfassend ein erstes und ein zweites Schlossteil (1, 2) zum einstellbaren Anbringen eines Vorrichtungsgehäuses, wobei das erste Teil (1), wenn es aus einer im Wesentlichen unbelasteten Position herausgepresst ist, auf dem zweiten Schlossteil (2) anbringbar ist und in angebrachter Schlossposition durch Schnappwirkung blockiert ist, sodass es nicht vom zweiten Teil abnehmbar ist, wobei das erste Schlossteil (1) eine Hülse (4) umfasst, die mit einer Verengung (16) versehen ist und, wenn sie herausgepresst wird und dadurch mechanisch vorbelastet ist, am zweiten Schlossteil (2) über einem vorderen Endabschnitt (8) davon anbringbar ist, wobei die Hülse (4) zunächst in eine herausgepresste Position gebracht wird, bevor die Hülse (4) bei erreichter Sperrposition gegen Abnahme durch Zusammenwirkung zwischen der Verengung und einer Verdickung (10), die am vorderen Endabschnitt (8) des zweiten Schlossteils (2) angeordnet ist, blockiert ist, **dadurch gekennzeichnet, dass** das erste Schlossteil (1) durch eine Reibungskraft, die zwischen der Hülse (4) und den Kontaktflächen des zweiten Schlossteils (2) wirkt, gegen Drehung eingeschränkt ist, und dass ein Reibungsmittel (21) derart zwischen Kontaktflächen des zweiten Schlossteils (2) und der Buchse (4) angeordnet ist, dass der Kontaktdruck auf das Reibungsmittel (21) beim Umstellen der Verengung zwischen der Sperrposition und der herausgepressten Position variiert, wobei das Reibungsmittel, wenn es durch die Schnappwirkung beeinflusst ist, zur elastischen Verformung zwischen den Kontaktflächen in der Sperrposition gebracht ist, um Drehen zu verhindern, und dass es seine Form im Wesentlichen zurückgewinnt, wenn der Kontaktdruck in der herausgepressten Position erneut verringert wird.

2. Schnappschloss nach Anspruch 1, wobei die Verengung (16) und die Verdickung (10) zum derartigen Zusammenwirken geeignet sind, dass der Verformungsgrad des Reibungsmittels (21) infolge des Vorsehens einer höheren wechselseitigen Bewegungsgeschwindigkeit zwischen der Verengung (16) und der Verdickung (10) beim Umstellen zur Sperrposition zunimmt.

3. Schnappschloss nach einem der Ansprüche 1 oder 2, wobei das Reibungsmittel (21) ein elastisches Polymermaterial, vorzugsweise ein thermoplastisches Elastomermaterial (TPE) umfasst.

4. Schnappschloss nach einem der Ansprüche 1 bis 3, wobei die Verengung (16) aus einer Reihe elastischer Zungen (15) in einem Ende der Hülse (4) ausgebildet ist.

5. Schnappschloss nach einem der Ansprüche 1 bis 4, wobei der vordere Endabschnitt (8) mit einer konisch geformten Kontaktfläche (9) gestaltet ist, die sich zu ihrem freien Ende hin verengt, und wobei die Hülse (4) mit einem Inneren mit einer Gestaltung gestaltet ist, die der Kontaktfläche im Wesentlichen entspricht.

6. Schnappschloss nach einem der Ansprüche 1 bis 5, wobei die Hülse (4) aus einem Teil eines schalenförmigen Teils (6) austritt und die Form einer Flanschung aufweist, die nach oben gerichtet ist.

7. Schnappschloss nach einem der Ansprüche 1 bis 6, wobei ein ringförmiger Spalt (20) in der Sperrposition zwischen einem Bund (18) und einer Kante (19) begrenzt ist, die jeweils in der Hülse (4) und dem vorderen Endabschnitt (8) enthalten sind.

8. Schnappschloss nach Anspruch 7, wobei der ringförmige Spalt (20) eine Breite aufweist, die derart angepasst ist, dass die Hülse (4) durch ein Betätigungshandwerkzeug, das in den Spalt eingeführt wird, aus ihrer Sperrposition getrieben werden kann.

9. Schnappschloss nach einem der Ansprüche 1 bis 8, wobei das Reibungsmittel (21) zumindest einen nutförmigen Umfangshohlraum (22) umfasst, der auf der Kontaktfläche des zweiten Schlossteils (2) oder der Hülse (4) ausgebildet ist, wobei in dem Hohlraum/den Hohlräumen jeweils ein Ring (23) aus einem elastischen Material aufgenommen ist.

10. Schnappschloss nach einem der Ansprüche 1 bis 9, wobei das Reibungsmittel (21) zumindest teilweise mit jeglichem der Schlossteile (1, 2) einstückig ist, wodurch konvexe Formen (26) ausgebildet sind, die von der Kontaktfläche des zweiten Schlossteils (2) oder der Hülse (4) verlaufen.

11. Schnappschloss nach Anspruch 10, wobei die einstückigen konvexen Formen (26) in die Kontaktfläche gesenkt sind.

12. Schnappschloss nach einem der Ansprüche 9 bis 11, wobei die Reibungsmittel (21) im Wesentlichen weicher als das Schlossteil (1, 2) gegenüber dem Rest sind.

13. Schnappschloss nach einem der Ansprüche 10 bis 12, wobei das Schnappschloss aus einem elastischen Polymermaterial, vorzugsweise aus einem thermoplastischen Elastomermaterial (TPE) hergestellt ist, umfassend ein Reibungsmittel (21), das durch Spritzgießen einstückig mit jeglichem der Schlossteile (1, 2) ist.

14. Schnappschloss nach einem der Ansprüche 11 bis 13, wobei das Reibungsmittel (21) als eine Anzahl von Ringflanschen (26) gestaltet ist, die in radialer Richtung zur Längs- oder axialen Richtung des Endabschnitts verlaufen, wobei die Ringflansche (26) entlang der Länge des vorderen Endabschnitts (8) angeordnet sind.

15. Schnappschloss nach einem der Ansprüche 10 bis 14, wobei das Reibungsmittel (21) eine Durometer-Shore-A-Härte im Intervall von 2 bis 6, vorzugsweise 3 bis 5 aufweist.

16. Schnappschloss nach einem der Ansprüche 10 bis 15, wobei das erste und zweite Schlossteil (1, 2) eine Durometer-Shore-A-Härte im Intervall von 50 bis 80, vorzugsweise 60 bis 80 aufweisen.

## Revendications

1. Fermeture à encliquetage comprenant une première et une seconde partie de fermeture (1, 2) pour un montage réglable de boîtier d'appareil, où la première partie de fermeture (1), lorsqu'elle est dégagée d'une position sensiblement non sollicitée, peut être montée sur la seconde partie de fermeture (2) et, en position montée de la fermeture, est bloquée par action d'encliquetage pour ne pas être retirée de la seconde partie, ladite première partie (1) de la fermeture comprend un manchon (4) pourvu d'un resserrement (16) qui, lorsqu'il est dégagé et, par suite, mécaniquement pré-sollicité, peut être monté sur la seconde partie (2) de la fermeture par-dessus sa section d'extrémité avant (8), dans laquelle ledit manchon (4) est tout d'abord disposé en position dégagée avant que le manchon (4), une fois atteinte la position de fermeture, ne soit maintenu bloqué à l'encontre de tout retrait par coopération entre le resserrement et un épaississement (10) aménagé sur la section d'extrémité avant (8) de la seconde partie (2) de la fermeture, **caractérisé en ce que** ladite première partie (1) de la fermeture est limitée à l'égard de toute rotation par une force de frottement agissant entre le manchon (4) et les surfaces de contact de la seconde partie (2) de la fermeture et **en ce que** des moyens de frottement (21) sont aménagés dans la zone comprise entre les surfaces de contact de la seconde partie (2) de la fermeture et le manchon (4) de façon que la pression de contact sur les moyens de frottement (21) varie lors du passage du resserrement entre la position de fermeture et la position dégagée, dans laquelle les moyens de frottement, lorsqu'ils sont affectés par l'effet d'encliquetage, sont soumis à une déformation plastique entre les surfaces de contact en position de fermeture pour empêcher une rotation et recouvrent sensiblement leur forme lorsque la pression de contact se réduit à nouveau en position dégagée.

2. Fermeture à encliquetage selon la revendication 1, dans laquelle le resserrement (16) et l'épaississement (10) sont à même de coopérer de sorte que le degré de déformation des moyens de frottement (21) augmente à la suite de l'application d'une vitesse plus élevée de déplacement mutuel entre le resserrement (16) et l'épaississement (10) lorsque l'on passe en position de fermeture.

3. Fermeture à encliquetage selon la revendication 1 ou la revendication 2, dans laquelle les moyens de frottement (21) comprennent un matériau polymère élastique, de préférence un matériau élastomère thermoplastique (TPE).

4. Fermeture à encliquetage selon l'une quelconque des revendications 1 à 3, dans laquelle le resserrement (16) est formé d'une série de languettes élastiques (15) à une extrémité du manchon (4).

5. Fermeture à encliquetage selon l'une quelconque des revendications 1 à 4, dans laquelle la section d'extrémité avant (8) est conçue avec une surface de contact (9) de forme conique qui se rétrécit vers son extrémité libre et le manchon (4) est conçu avec un intérieur d'une structure qui correspond sensiblement à celle de ladite surface de contact.

6. Fermeture à encliquetage selon l'une quelconque des revendications 1 à 5, dans laquelle le manchon (4) ressort d'une partie d'une pièce en forme de gaine (6) et a la forme d'un bordage dirigé vers le haut.

7. Fermeture à encliquetage selon l'une quelconque des revendications 1 à 6, dans laquelle un intervalle de forme annulaire (20) en position de fermeture est délimité entre un collier (18) et un bord (19), respectivement, inclus dans le manchon (4) et la section d'extrémité avant (8).

8. Fermeture à encliquetage selon la revendication 7, dans laquelle l'intervalle de forme annulaire (20) a une largeur qui est adaptée de sorte que le manchon (4) puisse être entraîné hors de sa position de fermeture par l'actionnement d'un outil manuel inséré dans l'intervalle.

9. Fermeture à encliquetage selon l'une quelconque des revendications 1 à 8, dans laquelle les moyens de frottement (21) comprennent au moins une cavité circonférentielle en forme de rainure (22) formée sur la surface de contact de la seconde partie (2) de la fermeture ou du manchon (4) dans la ou lesquelles cavités un anneau (23) constitué respectivement d'un matériau élastique est reçu.

10. Fermeture à encliquetage selon l'une quelconque des revendications 1 à 9, dans laquelle les moyens de frottement (21) sont au moins en partie intégrés à l'une quelconque des parties (1, 2) de la fermeture en formant des parties convexes (26) s'étendant de la surface de contact de la seconde partie (2) de la fermeture ou du manchon (4).

11. Fermeture à encliquetage selon la revendication 10, dans laquelle les parties convexes intégrées (26) sont fraisées dans la surface de contact.

12. Fermeture à encliquetage selon l'une quelconque des revendications 9 à 11, dans laquelle les moyens de frottement (21) sont sensiblement plus souples que la partie de fermeture (1, 2) sur le restant.

13. Fermeture à encliquetage selon l'une quelconque des revendications 10 à 12, dans laquelle la fermeture à encliquetage est constituée d'un matériau polymère élastique, de préférence un matériau élastomère thermoplastique (TPE), comprenant des moyens de frottement (21) qui sont intégrés à l'une quelconque des parties de fermeture (1, 2) par moulage par injection multiple.

14. Fermeture à encliquetage selon l'une quelconque des revendications 11 à 13, dans laquelle les moyens de frottement (21) sont conçus sous la forme d'un certain nombre de brides annulaires (26) s'étendant dans la direction radiale vers la direction longitudinale ou axiale de la section d'extrémité, lesdites brides annulaires (26) étant aménagées sur la longueur de la section d'extrémité avant (8).

15. Fermeture à encliquetage selon l'une quelconque des revendications 10 à 14, dans laquelle les moyens de frottement (21) ont une dureté au duromètre Shore A dans la plage de 2 à 6, de préférence de 3 à 5.

16. Fermeture à encliquetage selon l'une quelconque des revendications 10 à 15, dans laquelle lesdites première et seconde parties (1, 2) de la fermeture ont une dureté au duromètre Shore A dans la plage de 50 à 80, de préférence de 60 à 80.
